# EUROPEAN PATENT SPECIFICATION

(11) **EP 1 456 042 B1**
(45) Date of publication and mention of the grant of the patent: **18.02.2009**
(21) Application number: 01990590.0
(22) Date of filing: 21.12.2001
(51) Int. Cl.: B60C 1/00, C08L 23/02, C08L 21/00, C08L 65/00

(54) **TYRE COMPRISING A CYCLOOLEFIN POLYMER, TREAD BAND AND ELASTOMERIC COMPOSITION USED THEREIN**
CYCLOOLEFINPOLYMER ENTHALTENDE REIFEN, LAUFFLÄCHE UND ELASTOMERISCHE ZUSAMMENSETZUNG
PNEUMATIQUE CONTENANT UN POLYMERE CYCLO-OLEFINIQUE, BANDE DE ROULEMENT ET COMPOSITION D'ELASTOMERE CORRESPONDANTE

(43) Date of publication of application: 15.09.2004
(73) Proprietor: Pirelli Tyre S.p.A., 20126 Milano (IT)
(72) Inventor: GALIMBERTI, Maurizio, I-20133 Milano (IT); CAPRIO, Michela, I-83100 Avellino (IT); FINO, Luigi, I-20030 Bovisio Masciago (IT)
(74) Representative: Bottero, Carlo
(86) International application number: PCT/EP2001/015269
(87) International publication number: WO 2003/053721

(56) References cited:
- EP-A- 0 361 909
- EP-A- 0 386 896
- GB-A- 2 358 022
- US-A- 5 585 433

## Description

The present invention relates to a tyre for vehicle wheels, to a tread band and to a crosslinkable elastomeric composition.

More particularly, the present invention relates to a tyre for vehicle wheels comprising at least one component made of crosslinked elastomeric material including at least one cycloolefin polymer.

The present invention moreover relates to a tread band including a crosslinkable elastomeric composition comprising at least one cycloolefin polymer, and also to an elastomeric composition comprising at least one cycloolefin polymer.

As is known, in the field of producing tyres for vehicles wheeels, in particular very-high-performance tyres such as, for example, tyres designed for high-powered cars or, more generally, tyres intended for applications involving high operating speeds, one of the main problems to solve is always that of obtaining a good roadholding when the tyre exceeds the normal working temperatures of the tyre (40°C-70°C) following high thermomechanical stresses such as, for example, those derived from driving the vehicle under "hard handling" conditions.

Said tyres, which are commonly referred to as "HP" and "UHP" ("High Performance" and "Ultra High Performance") tyres, are in particular those belonging to the classes "V" and "Z" that respectively provide for maximum speeds over 210 Km/h and 240 Km/h, for which the operating performance at high temperatures is undoubtedly one of the most important factor.

Attempts have been made in the prior art to improve the performance of tyres over a wider range of temperatures than the normal working temperatures.

For example, European patent application EP 117,834 describes a tyre with a tread band consisting of a sulphur-crosslinked elastomeric composition which includes a dispersion comprising from about 2 phr to about 15 phr, preferably from about 3 phr to about 10 phr, of a polystyrene resin in the form of particles with a softening point of between about 90°C and about 120°C, preferably between about 90°C and about 110°C. The presence of said polystyrene resin in the tread band of the tyre is said to increase the holding on wet surfaces while keeping the rolling resistance unchanged under the normal conditions of use, and to ensure holding under conditions of particularly high friction. In this respect, the following explanation is given. When the temperature of the tread band reaches 120°C-150°C or higher values, due to particularly high friction conditions, and thus temperature values above the softening point of the polystyrene resin, the outer part of the tread band softens and this is believed to allow an increase in traction and better roadholding of the tyre. On the other hand, during normal use of the tyre, up to temperatures of about 70°C, and thus temperature values below the softening point of the polystyrene resin, said resin remains passive and the tyre maintains low rolling resistance values.

European patent application EP 1,029,874 describes a polymer resin derived from the polymerization of limonene, dicyclopentadiene and t-butylstyrene, for use in elastomeric compositions for manufacturing tyre tread bands. The presence of said polymer resin in the tyre tread band is said to make it possible to obtain an increase in holding on dry surfaces without having an adverse effect on the durability of the tyre.

European patent application EP 1,063,246 describes a polymer resin derived from the polymerization of limonene, dimethyldicyclopentadiene, indene and vinyltoluene, for use in elastomeric compositions for manufacturing tyre tread bands. The presence of said polymer resin in the tyre tread band is said to make it possible to obtain an increase in the holding on dry surfaces without having an adverse effect on the durability of the tyre.

European patent application EP 1,050,547 describes a polymer resin derived from the polymerization of limonene and dimethyldicyclopentadiene for use in elastomeric compositions for manufacturing tyre tread bands. The presence of said polymer resin in the tyre tread band is said to make it possible to obtain an increase in the holding on dry surfaces without having an adverse effect on the durability of the tyre.

European patent application EP 754,070 describes a crosslinkable elastomeric composition comprising a polymer base containing a crosslinkable unsaturated chain and at least one organic compound which is solid at ambient temperature, said compound being substantially insoluble in the polymer base and having a first-order or second-order transition temperature of between 80°C and 160°C and an average molecular weight of between 10,000 and 1,000, 000. Said organic compound is selected from polyphenylenether (such as, for example, Vestoran® 1100 from Hüls), polyethylene, polypropylene, polymethyl methacrylate, polyvinyl alcohol, ethylene/vinyl alcohol copolymers, acrylonitrile/butadiene/styrene (ABS) terpolymers, ethylene/methacrylic acid copolymers, styrene/isoprene (SIS), styrene/butadiene (SBS), styrene/ethylenebutylene/styrene (S-E/B-S) and styrene/ethylenepropylene (S/E-P) block copolymers, or mixtures thereof. The abovementioned elastomeric composition may be used to prepare tread bands and is said to make it possible to obtain tyres with both low rolling resistance at the normal temperatures of use (40°C-70°C) and high roadholding when the tyre exceeds said temperatures due to high thermomechanical stresses.

US patent 4,487,892 describes a rubber composition for use in tyres which comprises 1%-30% by weight of a non-crystallizable resinous polymer having a glass transition temperature (T_{g}) of not less than 110°C and 70%-99% by weight of at least one rubber selected from styrene/butadiene copolymer rubber containing not more than 60% by weight of bound styrene, natural rubber, polybutadiene rubber having 1,4-configuration of not less than 80%, polybutadiene rubber having 1,2-configuration of not less than 50%, butyl rubber, halogenated butyl rubber and polyisoprene rubber having cis-1,4-configuration of not less than 90%. Said non-crystallizable resinous polymer is selected from: α-methylstyrene homopolymer, α-methylstyrene/styrene copolymer, nuclear-substituted styrene homopolymer, nuclear-substituted α-methylstyrene homopolymer, styrene-nuclear-substituted styrene copolymer, styrene-nuclear-substituted α-methylstyrene copolymer, and copolymers thereof containing a diene monomer. The abovementioned rubber composition may be used to prepare tread bands and is said to make it possible to obtain tyres having high driving performances, i.e. considerably improved controllability and stability during high-speed running.

US patent 4,427,831 describes a rubber material comprising a mixture of an ordinary rubber and a powder of norbornene polymer which hardens at service temperature on ice and softens at higher temperatures and which does not lose its shape as a powder when heated during curing or shaping. Said ordinary rubber is selected from: butadiene rubber, styrene-butadiene rubber, isoprene rubber, or a natural rubber. The abovementioned rubber material may be formed into rubber articles such as tyres and shoes soles which have an excellent grip on ice.

US patent 4,166,083 describes a rubber composition comprising (a) 70% to 90% by weight of at least one diene rubber, and (b) 30% to 5% by weight of a polymer or copolymer obtained by polymerizing at least one norbornene compound. The abovementioned rubber composition, which may be used in tyres manufacturing, is said to have high green strength and improved tensile modulus, abrasion resistance and wet skid resistance.

Japanese Patent application 2001/119837 describes a crosslinkable elastomeric composition comprising (A) a non-conjugated cyclopolyene including 93 mol%-70 mol% of an α-olefin and 7 mol%-30 mol% of a cyclopolyene, said cyclopolyene having an intrinsic viscosity (η) of 0.01 dl/g to 20 dl/g measured in decaline at 135 °C, a glass transition temperature (T_{g}) not higher than 40°C and a iodine value of 50 to 150; and (B) a diene rubber. The abovementioned elastomeric composition may be used to prepare tread bands and is said to make it possible to obtain tyres having excellent breaking properties and excellent fuel cost performance.

European Patent Application EP 0 361 909 A2 discloses a polymer composition comprising (A) 100 parts by weight of a cyclo-olefin random copolymer of ethylene with a cyclo-olefin having, inter alia, a glass transition temperature (Tg) of 50 to 230°C; and (B) 5 to 150 parts by weight of at least one flexible polymer having a Tg of not more than 0°C; and (C) 0.004 to 1.0 part by weight of an organic peroxide. The above compositions are crosslinked by radical reaction by means of the above organic peroxide, and may be used for many applications such as synthetic waxes in candles, impregnating agents for match splints, etc., which are totally unrelated to the field of tyres and components thereof.

The Applicant has now found that it is possible to obtain crosslinkable elastomeric compositions capable of being used advantageously in the production of crosslinked manufactured products, in particular in the production of very-high-performance tyres, by using a cycloolefin polymer having a glass transition temperature (T_{g}) of not less than 50°C. In this way, it is possible to obtain a crosslinkable elastomeric composition which give a high roadholding when the tyre exceeds the normal working temperatures due to high thermomechanical stresses. Besides, the cycloolefin polymer is able to exert a reinforcing action on the elastomeric material, thus replacing, at least partially, if necessary, the conventional reinforcing fillers, while keeping good, both tensile and dynamic, mechanical properties and without impairing abrasion resistance.

According to a first aspect, the present invention thus relates to a tyre for vehicle wheels, comprising at least one component made of a crosslinked elastomeric material, in which said component includes an elastomeric composition comprising:
(a) at least one diene elastomeric polymer;
(b) at least one cycloolefin polymer, said cycloolefin polymer having a glass transition temperature (T_{g}) of not less than 50°C, preferably in the range of from 60°C to 250°C, more preferably from 80°C to 200°C, even more preferably from 100°C to 160°C.

According to one preferred embodiment, the present invention relates to a tyre for vehicle wheels, comprising:
- a carcass structure with at least one carcass ply shaped in a substantially toroidal configuration, the opposite lateral edges of which are associated with respective right-hand and left-hand bead wires, each bead wire being enclosed in a respective bead;
- a belt structure comprising at least one belt strip applied in a circumferentially external position relative to said carcass structure;
- a tread band superimposed circumferentially on said belt structure;
- a pair of side walls applied laterally on opposite sides relative to said carcass structure;
in which said component which includes said elastomeric composition is the tread band.

According to a further aspect, the present invention relates to a tyre tread band including a crosslinkable elastomeric composition comprising:
(a) at least one diene elastomeric polymer;
(b) at least one cycloolefin polymer, said polymer having a glass transition temperature (T_{g}) of not less than 50°C, preferably in the range of from 60°C to 250°C, more preferably from 80°C to 200°C, even more preferably from 100°C to 160°C,

According to a further aspect, the present invention relates to an elastomeric composition comprising:
(a) at least one diene elastomeric polymer;
(b) at least one cycloolefin polymer, said polymer having a glass transition temperature (T_{g}) of not less than 50°C, preferably in the range of from 60°C to 250°C, more preferably from 80°C to 200°C, even more preferably from 100°C to 160°C; (d) a sulphur-based vulcanizing system.

According to a further aspect, the present invention relates to a crosslinked elastomeric manufactured product obtained by crosslinking the aboivementioned elastomeric composition

According to one preferred embodiment, said cycloolefin polymer (b) is present in the elastomeric composition in an amount of from 0.1 phr to 100 phr, preferably from 3 phr to 60 phr, even more preferably from 5 phr to 40 phr.

For the purposes of the present description and of the claims, the term "phr" means the parts by weight of a given component of the elastomeric composition per 100 parts by weight of the elastomeric polymer.

According to one preferred embodiment, the diene elastomeric polymer (a) which may be used in the present invention may be selected from those commonly used in sulphur-crosslinkable elastomeric compositions, that are particularly suitable for producing tyres, that is to say from elastomeric polymers or copolymers with an unsaturated chain having a glass transition temperature (T_{g}) generally below 20°C, preferably in the range of from 0°C to -90°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be chosen, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred.

Monovinylarenes which may optionally be used as comonomers generally contain from 8 to 20, preferably from 8 to 12 carbon atoms, and may be chosen, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be chosen, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) which may be used in the present invention may be chosen, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

The elastomeric composition according to the present invention may optionally comprise at least one elastomeric polymer of one or more monoolefins with an olefinic comonomer or derivatives thereof (c). The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (a) or an elastomeric polymer (c) functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451 604, or patents US 4 742 124 and US 4 550 142).

According to one preferred embodiment, the cycloolefin polymer (b) which may be used in the present invention may be selected from:
(b-1) a cycloolefin random copolymer obtained by copolymerizing (i) at least one aliphatic α-olefin and (ii) at least one cycloolefin represented by the following formula (I) and, optionally, (iii) a polyene;
(b-2) a ring-opening polymer of at least one cycloolefin represented by the following formula (I); and
(b-3) a hydrogenation product of a ring-opening polymer of at least one cyclolefin represented by the following formula (I): 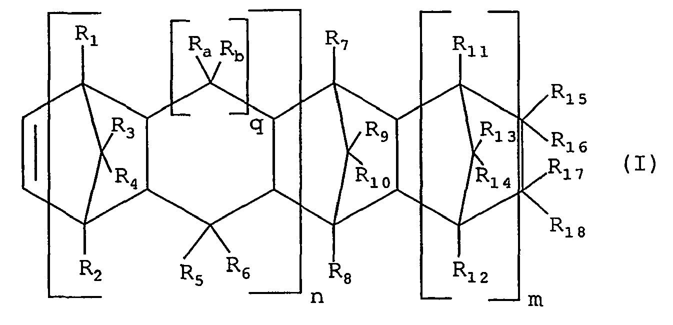 wherein:
   - n is 0 or a positive integer, preferably is 0 or 1;
   - m is 0 or a positive integer;
   - q is 0 or 1;
   - R₁, R₂, R₃, R₄, R₅, R₆, R₇, R₈, R₉, R₁₀, R₁₁, R₁₂, R₁₃, R₁₄, R₁₅, R₁₆, R₁₇, R₁₈, Rₐ ed R_{b}, which may be equal or different from each other, represent a hydrogen atom, a halogen atom, or an aliphatic, an alicyclic or an aromatic hydrocarbon group;
   - R₁₅, R₁₆, R₁₇, R₁₈, may be linked each other to form a monocyclic or polycyclic group which may have double bonds; and
   - R₁₅ and R₁₆, or R₁₇ and R₁₈, may together form an alkylidene group.

The term "aliphatic α-olefin" generally means an olefin of formula CH₂=CH-R, in which R represents a hydrogen atom, a linear or branched alkyl group containing from 1 to 12 carbon atoms. Preferably, the aliphatic α-olefin is selected from: ethylene, propylene, 1-butene, isobutylene, 1-pentene, 1-hexene, 3-methyl-1-butene, 3-methyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, or mixture thereof. Of these, preferred is ethylene or propylene, particularly preferred is ethylene.

Examples of the halogen atom include fluorine atom, chlorine atom, bromine atom and iodine atom.

Examples of the hydrocarbon group generally include alkyl group having from 1 to 20 carbon atoms, cycloalkyl group having from 3 to 15 carbon atoms, and aromatic hydrocarbon group having from 6 to 14 carbon atoms.

Specific examples of the alkyl group include methyl, propyl, isopropyl, amyl, octyl, decyl, dodecyl, octadecyl, these alkyl groups may be substituted with halogen atoms.

A specific example of the cycloalkyl group is cyclohexyl.

Specific examples of the aromatic hydrocarbon group include phenyl, naphthyl.

Moreover, in the above formula (I), R₁₅ and R₁₆, R₁₇ and R₁₈, R₁₅ and R₁₇, R₁₆ and R₁₈, R₁₅ and R₁₈, or R₁₆ and R₁₇, may be linked together to form a monocyclic or polyciclic group, optionally containing a double bonds.

Examples of the monocyclic or polyciclic group are the following: 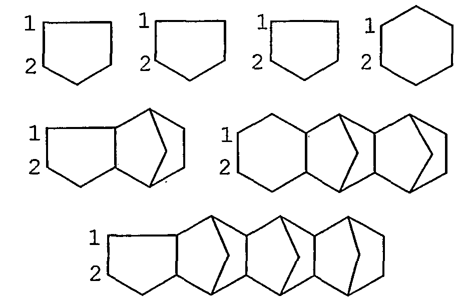 wherein carbon atoms attached with numerals 1 and 2 are those to which substituent R₁₅ or R₁₆ and R₁₇ or R₁₈ are linked respectively.

In the above formula (I), R₁₅ and R₁₆ or R₁₇ and R₁₈ may together form an alkylidene group. This alkylidene group generally has from 2 to 20 carbon atoms and, examples of such alkylidene group include ethylidene, propylidene, isopropylidene.

In the above formula (I), when q is 1, the corresponding ring is a 6-membered ring and, when q is 0, the corresponding ring is a 5-membered ring.

Preferably, the cycloolefin polymer (b) which may be used in the present invention may be selected from copolymers of a cyclic olefin having a norbornene-based structure (preferably norbornene, tetracyclododecene or cyclic olefins having a structure derived from them), and an aliphatic α-olefin (preferably ethylene or propylene). Among them, norbornene-ethylene copolymer, norbornene-propylene copolymer, tetracyclododecene-ethylene copolymer, tetracyclododecene-propylene copolymer, are particularly preferred. More partycularly, norbornene-ethylene copolymer is preferred.

With reference to a cycloolefin random copolymer (b-1), the term "polyene" generally means a conjugated or non-conjugated diene, triene or tetraene. When a diene comonomer is present, this comonomer generally contains from 4 to 20 carbon atoms and is preferably selected from: linear conjugated or non-conjugated diolefins such as, for example, 1,3-butadiene, 1,4-hexadiene, 1,6-octadiene; monocyclic or polycyclic dienes such as, for example, 1,4-cyclohexadiene, 5-ethylidene-2-norbornene, 5-methylene-2-norbornene, vinylnorbornene, or mixtures thereof. When a triene or tetraene comonomer is present, this comonomer generally contains from 9 to 30 carbon atoms and is preferably selected from trienes or tetraenes containing a vinyl group in the molecule or a 5-norbornen-2-yl group in the molecule. Specific examples of triene or tetraene comonomers which may be used in the present invention are: 6,10-dimethyl-1,5,9-undecatriene, 5,9-dimethyl-1,4,8-decatriene, 6,9-dimethyl-1,5,8-decatriene, 6,8,9-trimethyl-1,6,8-decatriene, 6,10,14-trimethyl-1,5,9,13-pentadecatetraene, or mixture thereof. Preferably, the polyene is a diene.

Usually, the cyclolefin polymer (b) as described above, has an intrinsic viscosity [η] as measured in decalin at 135°C, of from 0.01 dl/g to 10 dl/g, preferably from 0.05 dl/g to 5 dl/g, more preferably 0.3 dl/g to 2 dl/g.

The cycloolefin random copolymer (b-1) generally has the following composition: 40 mol%-85 mol%, preferably 42 mol%-80 mol%, of an aliphatic α-olefin; 15 mol%-60 mol%, preferably 20 mol%-58 mol% of a cycloolefin having formula (I); 0 mol%-10 mol%, preferably 0 mol%-2 mol%, of a polyene.

The cycloolefin random copolymer (b-1) may be obtained by copolymerization of (i) at least one α-olefin with at least (ii) a cycloolefin having formula (I) and, if necessary, (iii) a polyene, in the presence of a catalyst formed from a soluble vanadium compound such as, for example, VOCl₃, VO (C₂H₅) Cl₂, VOCl₂, VOBr₂, and an organoaluminium compound such as, for example, an alkyl- or alkenyl-aluminum compound.

Said copolymerization may be carried out also in the presence of a metallocene compound as catalyst such as, for example, coordination complexes between a transition metal, usually from group IV, in particular titanium, zirconium or hafnium, and two optionally substituted cyclopentadienyl ligands, which are used in combination with a co-catalyst, for example an aluminoxane, preferably methylaluminoxane, and, if necessary of an organoaluminum compound such as, for example, an alkyl- or alkenyl-aluminum compound. In this case, the cycloolefin random copolymer(b-1) has a molecular weight distribution (MWD) index of less than 5, preferably between 1.5 and 3.5.

Said molecular weight distribution index is defined as the ratio between the weight-average molecular weight (M_{w}) and the number-average molecular weight (Mₙ) and may be determined, according to conventional techniques, by gel permeation chromatography.

The ring-opening polymer (b-2) may be obtained by ring-opening polymerization of at least one cycloolefin having formula (I) in the presence of a ring-opening polymerization catalyst. Said ring-opening polymerization catalysts may be selected from:
- catalysts formed from at least one halide, one nitrate, or one acetylacetone compound of metal such as ruthenium, rhodium, osmium, indium platinum, molybdenum or tungsten, and at least one reducing agent such as alcohol or tin compound;
- catalysts formed from at least one halide or one acetylacetone compound of metal such as titanium, vanadium, zirconium, tungsten or molibdenum, and at least one metallic aluminum compounds.

The hydrogenation product of a ring-opening polymer of a cyclolefin (b-3) may be obtained by hydrogenating the cycloolefin ring-opening polymer (b-2) as prepared above. For hydrogenating the ring-opening polymer (b-2), a conventional hydrogenation process which is carried out in the presence of a hydrogenation catalyst can be adopted.

More details relating to the synthesis of the random cycloolefin copolymers (b-1), (b-2) e (b-3) may be found, for example, in US patents US 5,494,969, US 5,741,869 and US 5,569,711.

Examples of cycloolefin random copolymers (b-1) which may be used in the present invention and which are currently commercially available are the products Topas® from Ticona.

At least one reinforcing filler may advantageously be added to the elastomeric composition according to the present invention, in an amount generally of from 0.1 phr to 120 phr, preferably from 20 phr to 90 phr. The reinforcing filler may be selected from those commonly used for crosslinked manufactured products, in particular for tyres, such as, for example, carbon black, silica, alumina, aluminosilicates, calcium carbonate, kaolin, or mixtures thereof.

The types of carbon black which may be used according to the present invention may be selected from those conventionally used in the production of tyres, generally having a surface area of not less than 20 m²/g (determined by CTAB absorption as described in ISO standard 6810).

The silica which may be used according to the present invention may generally be a pyrogenic silica or, preferably, a precipitated silica, with a BET surface area (measured according to ISO standard 5794/1) of from 50 m²/g to 500 m²/g, preferably from 70 m²/g to 200 m²/g.

When a reinforcing filler comprising silica is present, the elastomeric composition may advantageously incorporate a coupling agent capable of interacting with the silica and of linking it to the elastomeric base during the vulcanization.

Coupling agents that are preferably used are those based on silane which may be identified, for example, by the following structural formula (II):

(R)₃Si-CₙH₂ₙ-X (II)

in which the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, -(S)ₘCₙH₂n-Si-(R)₃ in which m and n are integers between 1 and 6 inclusive and the groups R are defined as above.

Among the coupling agents that are particularly preferred are bis(3-triethoxysilylpropyl) tetrasulphide and bis (3-triethoxysilylpropyl) disulphide. Said coupling agents may be used as such or as a suitable mixture with an inert filler (for example carbon black) so as to facilitate their incorporation into the elastomeric composition.

The elastomeric composition according to the present invention may be vulcanized according to known techniques, with sulphur-based vulcanizing systems commonly used for diene elastomeric polymers. To this end, in the composition, after a first stage of thermomechanical processing, a sulphur-based vulcanizing agent is incorporated together with vulcanization accelerators. In this second processing stage, the temperature is generally kept below 120°C and preferably below 100°C, so as to avoid any unwanted pre-cross-linking phenomena.

The vulcanizing agent most advantageously used is sulphur, or molecules containing sulphur (sulphur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

The elastomeric composition according to the present invention may comprise other commonly used additives chosen on the basis of the specific application for which the composition is intended. For example, the following may be added to said composition: antioxidants, anti-ageing agents, plasticizers, adhesives, anti-ozone agents, modifying resins, fibres (for example Kevlar® pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to the elastomeric composition according to the present invention. The amount of plasticizer generally ranges from 2 phr to 100 phr, preferably from 5 phr to 50 phr.

The elastomeric composition according to the present invention may be prepared by mixing together the polymeric components with the reinforcing filler optionally present and with the other additives according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss) or of co-rotating or counter-rotating twin-screw type.

The cycloolefin polymer (b) may be used in the form of powder, granules or pellets. In order to improve mixing with the other components, such polymers may be used combined with a plasticizer, such as glycerin, pentaerythrite, and the like. Preferably, the compositions according to the present invention are produced in two steps. In a first step, the mixture of the cycloolefin polymer (b) with a portion of the elastomeric polymer is prepared, thereby forming a masterbatch. In a subsequent step, the masterbatch is mixed with the remaining portion of the elastomeric polymer and the other components, according to conventional methods. The first step of masterbatch preparation is preferably carried out in a continuous mixer, for instance a twin-screw extruder, at a temperature of more than 120°C, so as to obtain a good dispersion of the thermoplastic polymer in the elastomeric polymer. The continuous mixers of preferred use are those having an adjustable geometry of the screw and thermal profile of the cylinder.

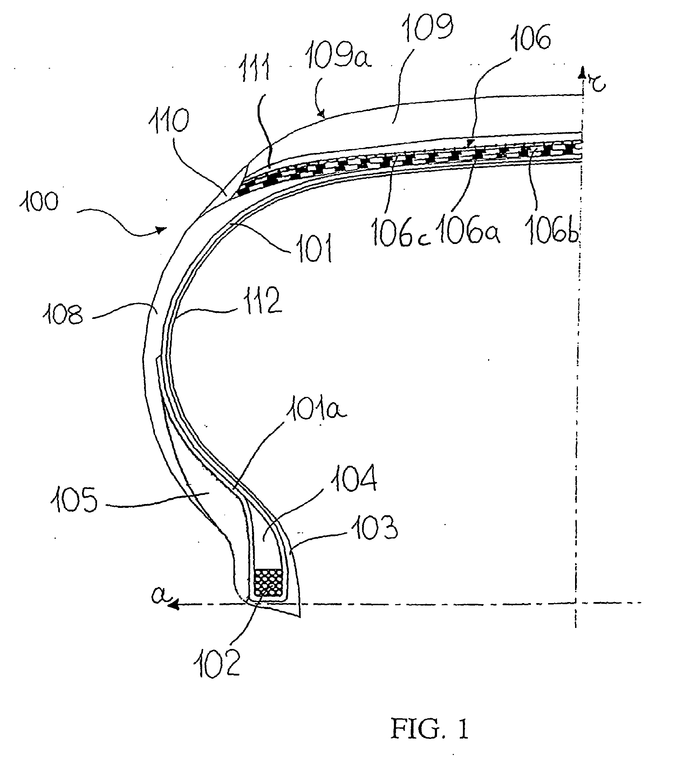

The present invention will now be illustrated in further detail by means of a number of illustrative embodiments, with reference to the attached Fig. 1, which is a view in cross section of a portion of a tyre made according to the invention.

"a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one carcass ply (101), the opposite lateral edges of which are associated with respective bead wires (102). The association between the carcass ply (101) and the bead wires (102) is achieved here by folding back the opposite lateral edges of the carcass ply (101) around the bead wires (102) so as to form the so-called carcass back-folds (101a) as shown in Fig. 1.

Alternatively, the conventional bead wires (102) can be replaced with a pair of circumferentially inextensible annular inserts formed from elongate components arranged in concentric coils (not represented in Fig. 1) (see, for example, European patent applications EP 928,680 and EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of elastomeric compound. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing cords arranged in a substantially perpendicular direction relative to a circumferential direction. Each bead wire (102) is enclosed in a bead (103), defined along an inner circumferential edge of the tyre (100), with which the tyre engages on a rim (not represented in Fig. 1) forming part of a vehicle wheel. The space defined by each carcass back-fold (101a) contains a bead filler (104) in which the bead wires (102) are embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c) , commonly known as a "0° belt", which generally incorporates a plurality of reinforcing cords, typically textile cords, arranged at an angle of a few degrees relative to a circumferential direction, and coated and welded together by means of an elastomeric material.

A side wall (108) is also applied externally onto the carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109), which can be produced according to the present invention, has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109). A underlayer which forms, with the tread band (109), a structure commonly known as a "cap and base" (not represented in Fig. 1) may optionally be placed between the belt structure (106) and the tread band (109).

A layer of elastomeric material (111) which serves as an "attachment sheet", i.e. a sheet capable of providing the connection between the tread band (109) and the belt structure (106), may be placed between the tread band (109) and the belt structure (106).

In the case of tubeless tyres, a rubber layer (112) generally known as a "liner", which provides the necessary impermeability to the inflation air of the tyre, may also be provided in a radially internal position relative to the carcass ply (101).

The process for producing the tyre according to the present invention can be carried out according to techniques and using apparatus that are known in the art, as described, for example, in patents EP 199 064, US 4,872,822, US 4,768,937, said process including at least one stage of manufacturing the green tyre and at least one stage of vulcanizing this tyre.

More particularly, the process for producing the tyre comprises the stages of preparing, beforehand and separately from each other, a series of semi-finished products corresponding to the various parts of the tyre (carcass plies, belt structure, bead wires, fillers, side walls and tread band) which are then combined together using a suitable manufacturing machine. Next, the subsequent vulcanization stage welds the abovementioned semi-finished products together to give a monolithic block, i.e. the finished tyre.

Naturally, the stage of preparing the abovementioned semi-finished products will be preceded by a stage of preparing and moulding the various blends, of which said semi-finished products are made, according to conventional techniques.

The green tyre thus obtained is then passed to the subsequent stages of moulding and vulcanization. To this end, a vulcanization mould is used which is designed to receive the tyre being processed inside a moulding cavity having walls which are countermoulded to define the outer surface of the tyre when the vulcanization is complete.

Alternative processes for producing a tyre or parts of a tyre without using semi-finished products are disclosed, for example, in the abovementioned patent applications EP 928,680 and EP 928,702.

The green tyre can be moulded by introducing a pressurized fluid into the space defined by the inner surface of the tyre, so as to press the outer surface of the green tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding can be carried out without an inflatable vulcanization chamber, by providing inside the tyre a toroidal metal support shaped according to the configuration of the inner surface of the tyre to be obtained as decribed, for example, in patent EP 242,840. The difference in coefficient of thermal expansion between the toroidal metal support and the crude elastomeric material is exploited to achieve an adequate moulding pressure.

At this point, the stage of vulcanizing the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is heated to the vulcanization temperature using the same pressurized fluid used to press the tyre against the walls of the moulding cavity, heated to a maximum temperature of between 100°C and 250°C. The time required to obtain a satisfactory degree of vulcanization throughout the mass of the elastomeric material can vary in general between 3 min and 90 min and depends mainly on the dimensions of the tyre. When the vulcanization is complete, the tyre is removed from the vulcanization mould.

Although the present invention has been illustrated specifically in relation to a tyre, other crosslinked elastomeric manufactured products that can be produced according to the invention may be, for example, conveyor belts, driving belts or flexible tubes.

The present invention will be further illustrated below by means of a number of preparation examples, which are given for purely indicative purposes and without any limitation of this invention.

### EXAMPLE 1

### Preparation of the masterbatch

A masterbatch comprising the following ingredients was prepared:
75% by weight of SBR: styrene/butadiene copolymer, obtained by emulsion polymerization, containing 40% by weight of styrene, mixed with 37.5% of oil (Europrene® 1721 - EniChem Elastomeri);
25% by weight of Topas® 6013: copolymer of norbornene and ethylene with norbornene content of 45% mol; Tg = 130°C; MWD = 2; (commercialized by Ticona).

A mixture of the ingredients above reported was fed to a parallel twin-screw (co-rotating) extruder having a length/diameter ratio L/D = 30. The maximum temperature reached during the extrusion was of 200°C ± 5°C. The masterbatch was cooled by water.

### EXAMPLE 2-5

### Preparation of the elastomeric compositions

The elastomeric compositions given in Table 1 were prepared as follows (the amounts of the various components are given in phr).

All the ingredients, except for the sulphur and the accelerator, were mixed together in an internal mixer (model Pomini PL 1.6) for about 5 min (1st Stage) . As soon as the temperature reached 145±5°C, the elastomeric composition was discharged. The sulphur, the accelerator and the retardant were then added and mixing was carried out in an open roll mixer (2nd Stage).

**TABLE 1**

| EXAMPLE | 2 (*) | 3 (*) | 4 (*) | 5 |
|---|---|---|---|---|
| 1st Stage | | | | |
| SBR | 100 | 100 | 100 | 70 |
| Carbon black | 60 | 60 | 60 | 60 |
| Zinc oxide | 2.5 | 2.5 | 2.5 | 2.5 |
| Stearic acid | 1 | 1 | 1 | 1 |
| Aromatic oil | 10 | - | - | - |
| Methylstyrene resin | - | 10 | - | - |
| Norsorex® N | - | - | 10 | - |
| MB Topas® 6013 | - | - | - | 40 |
| Antioxidant | 2 | 2 | 2 | 2 |

| 2^{nd} Stage | | | | |
|---|---|---|---|---|
| CBS | 2 | 2 | 2 | 2 |
| Sulphur | 1 | 1 | 1 | 1 |

| | | | | |
|---|---|---|---|---|
| (*): comparative. SBR: styrene/butadiene copolymer, obtained by emulsion polymerization, containing 40% by weight of styrene, mixed with 37.5% of oil (Europrene® 1721 - EniChem Elastomeri); Carbon black: N115 (Vulcan® 9 - Cabot); Methylstyrene resin: α-methylstyrene resin (Kristalex® F85 - Hercules); Norsorex® N: polynorbornene (Zeon Italia S.r.l.); MB Topas® 6013: masterbatch of Example 1; Antioxidant: phenyl-p-phenylenediamine; CBS (accelerator): N-cyclohexyl-2-benzothiazyl-sulphenamide (Vulkacit® CZ - Bayer). | | | | |

The static mechanical properties were measured on samples of the abovementioned elastomeric compositions vulcanized at 151°C for 30 min, according to ISO standard 37, and hardness in IRHD degrees was measured at 23°C and at 100°C (according to ISO standard 48). The results obtained are given in Table 2.

Table 2 also shows the dynamic mechanical properties, measured using an Instron dynamic device in the traction-compression mode according to the following methods. A test piece of the cross-linked material having a cylindrical form (length = 25 mm; diameter = 14 mm), compression-preloaded up to a 10% longitudinal deformation with respect to the initial length, and kept at the prefixed temperature (70°C or 10°C) for the whole duration of the test, was submitted to a dynamic sinusoidal strain having an amplitude of ±3.33% with respect to the length under pre-load, with a 10 Hz frequency. The dynamic mechanical properties are expressed in terms of dynamic elastic modulus (E') and tandelta (loss factor) values. As is known, the tandelta value is calculated as a ratio between the viscous modulus (E") and the elastic modulus (E'), both of them being determined with the above dynamic measurements.

Lastly the DIN abrasion values were measured according to ISO standard 4649, also reported in Table 2, expressed as relative volumetric loss with respect to the reference composition of Example 2 (set at 100).

**TABLE 2**

| EXAMPLE | 2 (*) | 3 (*) | 4 (*) | 5 |
|---|---|---|---|---|
| STATIC MECHANICAL PROPERTIES | | | | |
| 100% modulus (MPa) | 2.00 | 2.33 | 3.85 | 5.65 |
| 300% modulus (MPa) | 9.39 | 10.25 | 15.20 | - |
| Stress at break | 16.81 | 17.46 | 17.10 | 15.31 |
| (MPa) | | | | |

| DINAMIC MECHANICAL PROPERTIES | | | | |
|---|---|---|---|---|
| E' (23°C) | 8.89 | 10.10 | 12.85 | 20.83 |
| E' (70°C) | 4.85 | 5.06 | 6.68 | 11.19 |
| E' (100°C) | 4.15 | 4.28 | 5.65 | 7.36 |
| E' (120°C) | 4.08 | 4.20 | 5.58 | 5.79 |
| Tandelta (23°C) | 0.480 | 0.527 | 0.456 | 0.486 |
| Tandelta (70°C) | 0.305 | 0.318 | 0.297 | 0.343 |
| Tandelta (100°C) | 0.239 | 0.244 | 0.229 | 0.308 |
| Tandelta (120°C) | 0.210 | 0.212 | 0.202 | 0.302 |
| Tandelta | 0.78 | 0.77 | 0.77 | 0.90 |
| (100°C)/Tandelta | | | | |
| (70°C) | | | | |
| Tandelta | 0.69 | 0.67 | 0.68 | 0.88 |
| (120°C)/Tandelta | | | | |
| (70°C) | | | | |
| Tandelta | 0.88 | 0.87 | 0.88 | 0.98 |
| (120°C)/Tandelta | | | | |
| (100°C) | | | | |
| IRHD hardness at | 72 | 76 | 84 | 90 |
| 23°C | | | | |
| IRHD hardness at | 54 | 56 | 62 | 63 |
| 100°C | | | | |
| DIN abrasion | 100 | 92 | 94 | 103 |
| (index) | | | | |

| | | | | |
|---|---|---|---|---|
| (*):comparative. | | | | |

The results given in Table 2 show that the crosslinked manufactured product comprising the cycloolefin polymer according to the present invention (Example 5) has improved hysteresis properties at high temperatures. In particular, althoug the Tandelta value decreases as the temperature increases, it decreases less than that of the comparative compositions. The elastomeric compositions according to the invention thus allow to obtain a better roadholding at high temperatures. In addition, these effects were obtained without any remarkable worsening of abrasion resistance.

## Claims

1. Tyre for vehicle wheels, comprising at least one component made of a crosslinked elastomeric material, in which said component includes, an elastomeric composition, comprising:
(a) at least one diene elastomeric polymer;
(b) at least one cycloolefin polymer, said cycloolefin polymer having a glass transition temperature (T_{g}) of not less than 50°C.

2. Tyre according to claim 1, comprising:
- a carcass structure with at least one carcass ply shaped in a substantially toroidal configuration, the opposite lateral edges of which are associated with respective right-hand and left-hand bead wires, each bead wire being enclosed in a respective bead;
- a belt structure comprising at least one belt strip applied in a circumferentially external position relative to said carcass structure;
- a tread band superimposed circumferentially on said belt structure;
- a pair of side walls applied laterally on opposite sides relative to said carcass structure;
in which said component which includes said elastomeric composition is the tread band.

3. Tyre according to claim 1 or 2, in which said cycloolefin polymer has a glass transition temperature (T_{g}) in the range of from 60°C to 250°C.

4. Tyre according to claim 3, in which said cycloolefin polymer has a glass transition temperature (T_{g}) in the range of from 80°C to 200°C.

5. Tyre according to claim 4, in which said cycloolefin polymer has a glass transition temperature (T_{g}) in the range of from 100°C to 160°C.

6. Tyre according to any one of the preceding claims, in which the cycloolefin polymer (b) is selected from:
(b-1) a cycloolefin random copolymer obtained by copolymerizing (i) at least one aliphatic α-olefin and (ii) at least one cycloolefin represented by the following formula (I) and, optionally, (iii) a polyene;
(b-2) a ring-opening polymer of at least one cycloolefin represented by the following formula (I) ; and
(b-3) a hydrogenation product of a ring-opening polymer of at least one cyclolefin represented by the following formula (I): 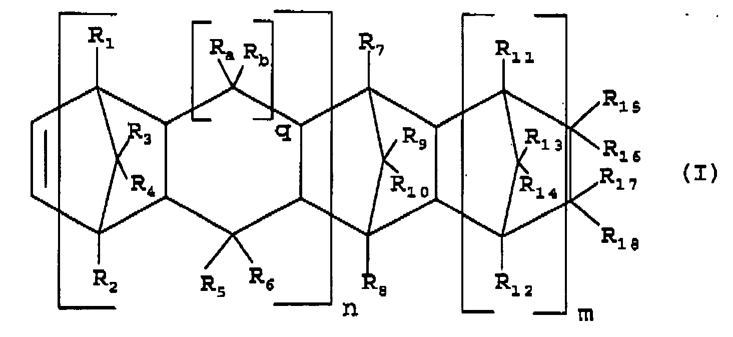 wherein:
- n is 0 or a positive integer;
- m is 0 or a positive integer;
- q is 0 or 1;
- R₁, R₂, R₃ R₄, R₅, R₆, R₇, R₈, R₉, R₁₀, R₁₁, R₁₂, R₁₃, R₁₄, R₁₅, R₁₆, R₁₇, R₁₈, Rₐ ed R_{b}, which may be equal or different from each other, represent a hydrogen atom, a halogen atom, or an aliphatic, an alicyclic or an aromatic hydrocarbon group;
- R₁₅, R₁₆, R₁₇, R₁₈, may be linked each other to form a monocyclic or polycyclic group which may have double bonds; and
- R₁₅ and R₁₆, or R₁₇ and R₁₈, may together form an alkylidene group.

7. Tyre according to claim 6, in which in the cycloolefin random copolymer (b-1) the aliphatic α-olefin is an olefin of formula CH₂=CH-R, in which R represents a hydrogen atom, a linear or branched alkyl group containing from 1 to 12 carbon atoms.

8. Tyre according to claim 7, in which the aliphatic α-olefin is selected from: ethylene, propylene, 1-butene, isobutylene, 1-pentene, 1-hexene, 3-methyl-1-butene, 3-methyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, or mixture thereof.

9. Tyre according to claim 8, in which the aliphatic α-olefin is ethylene or propylene.

10. Tyre according to any one of the preceding claims, in which a cycloolefin polymer (b) is selected from copolymers of a cyclic olefin having a norbornene structure and an aliphatic α-olefin.

11. Tyre according to claim 10, in which a cycloolefin polymer (b) is selected from norbornene-ethylene copolymer, norbornene-propylene copolymer, tetracyclododenene-ethylene copolymer, tetracyclododecene-propylene copolymer.

12. Tyre according to claim 11, in which a cycloolefin polymer (b) is a norbornene-ethylene copolymer.

13. Tyre according to any one of the preceding claims, in which in a cycloolefin random copolymer (b-1), the polyene is a diene.

14. Tyre according to any one of the preceding claims, in which the cycloolefin polymer (b) is present in the elastomeric composition in an amount of from 0.1 phr to 100 phr.

15. Tyre according to claim 14, in which the cycloolefin polymer (b) is present in the elastomeric composition in an amount of from 3 phr to 60 phr.

16. Tyre according to claim 15, in which the cycloolefin polymer (b) is present in the elastomeric composition in an amount of from 5 phr to 40 phr.

17. Tyre according to any one of the preceding claims, in which the diene elastomeric polymer (a) has a glass transition temperature (T_{g}) below 20°C.

18. Tyre according to claim 17, in which the diene elastomeric polymer (a) is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

19. Tyre according to any one of the preceding claims, in which the elastomeric composition comprises at least one elastomeric polymer of one or more monoolefins with an olefinic comonomer or derivatives thereof (c).

20. Tyre according to claim 19, in which the elastomeric polymer (c) is selected from:
ethylene/propylene copolymers (EPR) or ethylene/propylene/diene copolymers (EPDM);
polyisobutene; butyl rubbers; halobutyl rubbers; or mixtures thereof.

21. Tyre according to any one of the preceding claims, in which the elastomeric composition further comprises a sulphur-based vulcanizing system (d).

22. Tyre according to claim 21, in which the sulphur-based vulcanizing system comprises sulphur, or molecules containing sulphur, accelerators and activators.

23. Tyre according to any one of the preceding claims, in which at least one reinforcing filler is present, in an amount of between 0.1 phr and 120 phr, in the elastomeric composition.

24. Tyre according to claim 23, in which the reinforcing filler is carbon black.

25. Tyre according to claim 23, in which the reinforcing filler is silica.

26. Tyre tread band including a crosslinkable elastomeric composition comprising:
(a) at least one diene elastomeric polymer;
(b) at least one cycloolefin polymer, said cycloolefin polymer having a glass transition temperature (T_{g}) of not less than 50°C.

27. Tyre tread band according to claim 26, in which said cycloolefin polymer has a glass transition temperature (T_{g}) in the range of from 80°C to 200°C.

28. Tyre tread band according to claim 27, in which said cycloolefin polymer has a glass transition temperature (T_{g}) in the range of from 100°C to 160°C.

29. Tyre tread band according to any one of claims 26 to 28, in which the copolymer of ethylene with at least one aliphatic α-olefin (b) is defined according to any one of claims 6 to 16.

30. Tyre tread band according to any one of claims 26 to 29, in which the diene elastomeric polymer (a) is defined according to claim 17 or 18.

31. Tyre tread band according to any one of claims 26 to 30, in which the elastomeric composition comprises at least one elastomeric polymer (c) defined according to claim 19 or 20.

32. Tyre tread band according to any one of claims 26 to 31, in which the crosslinkable elastomeric composition further comprises a sulphur-based vulcanizing system (d) according to claim 21 or 22.

33. Tyre tread band according to any one of claims 26 to 32, in which at least one reinforcing filler is present, in an amount of between 0.1 phr and 120 phr, in the elastomeric composition.

34. Tyre tread band according to claim 33, in which the reinforcing filler is carbon black.

35. Tyre tread band according to claim 33, in which the reinforcing filler is silica.

36. Elastomeric composition comprising:
(a) at least one diene elastomeric polymer;
(b) at least one cycloolefin polymer, said cycloolefin polymer having a glass transition temperature (T_{g}) of not less than 50°C; and
(d) a sulphur-based vulcanizing system.

37. Elastomeric composition according to claim 36, in which said cycloolefin polymer has a glass transition temperature (T_{g}) in the range of from 80°C to 200°C.

38. Elastomeric composition according to claim 37, in which said cycloolefin polymer has a glass transition temperature (T_{g}) in the range of from 100°C to 160°C.

39. Elastomeric composition according to any one of claims 36 to 38, in which the copolymer of ethylene with at least one aliphatic α-olefin (b) is defined according to any one of Claims 6 to 16.

40. Elastomeric composition according to any one of claims 36 to 39, in which the diene elastomeric polymer (a) is defined according to claim 17 or 18.

41. Elastomeric composition according to any one of claims 36 to 40, in which the elastomeric composition comprises at least one elastomeric polymer (c) defined according to claim 19 or 20.

42. Elastomeric composition according to any one of claims 36 to 41, in which the sulphur-based vulcanizing system comprises sulphur, or molecules containing sulphur, accelerators and activators.

43. Elastomeric composition according to any one of claims 36 to 42, in which at least one reinforcing filler is present, in an amount of between 0.1 phr and 120 phr.

44. Elastomeric composition according to claim 43, in which the reinforcing filler is carbon black.

45. Elastomeric composition according to claim 43, in which the reinforcing filler is silica.

46. Crosslinked elastomeric manufactured product obtained by crosslinking an elastomeric composition defined according to any one of Claims 36 to 45.

## Patentansprüche

1. Reifen für Kraftfahrzeuge, der wenigstens eine aus einem vernetzten Elastomermaterial hergestellte Komponente umfaßt, die ihrerseits ein Elastomergemisch einschließt, das
(a) wenigstens ein Dienelastomerpolymer und
(b) wenigstens ein Cycloolefinpolymer umfaßt, das eine Glasumwandlungstemperatur (T_{g}) von wenigstens 50° C aufweist.

2. Reifen nach Anspruch 1, der
- einen Karkassenaufbau mit wenigstens einer, im Wesentlichen ringförmige Konfiguration aufweisenden Karkassenzwischenlage, deren gegenüberliegende seitliche Kanten mit den entsprechenden rechtsseitigen und linksseitigen Wulstdrähten verbunden sind, wobei jeder Wulstdraht von einem entsprechenden Wulst umschlossen ist,
- einen Gürtelaufbau, der wenigstens einen in am Umfang äußerer Position im Hinblick auf den Karkassenaufbau aufgebrachten Gürtelstreifen umfaßt,
- ein am Umfang auf den Gürtelaufbau aufgebrachtes Laufflächenband und
- ein Paar von Seitenwänden, die lateral auf die gegenüberliegenden Seiten in Bezug auf den Karkassenaufbau aufgebracht sind,
bei dem die Komponente, welche das Elastomergemisch umfaßt, das Laufflächenband ist.

3. Reifen nach Anspruch 1 oder 2, bei dem das Cycloolefinpolymer eine
Glasumwandlungstemperatur (T_{g}) im Bereich von 60° C bis 250° C aufweist.

4. Reifen nach Anspruch 3, bei dem das Cycloolefinpolymer eine
Glasumwandlungstemperatur (T_{g}) im Bereich von 80° C bis 200° C aufweist.

5. Reifen nach Anspruch 4, bei dem das Cycloolefinpolymer eine Glasumwandlungstemperatur (T_{g}) im Bereich von 100° C bis 160° C aufweist.

6. Reifen nach einem der vorhergehenden Ansprüche, bei dem das Cycloolefinpolymer (b) ausgewählt wird aus;
(b-1) einem statistischem Cycloolefinpolymer, erhalten durch Copolymerisation (i) wenigstens eines aliphatischen α-Olefins und (ii) wenigstens eines Cycloolefins der nachfolgenden Formel (I) und gegebenenfalls (iii) eines Polyens,
(b-2) einem Ringöffnungspolymer wenigstens eines Cycloolefins der nachfolgenden Formel (I) und
(b-3) einem Hydrierprodukt eines Ringöffnungspolymers wenigstens eines Cycloolefin der nachfolgenden Formel (1): 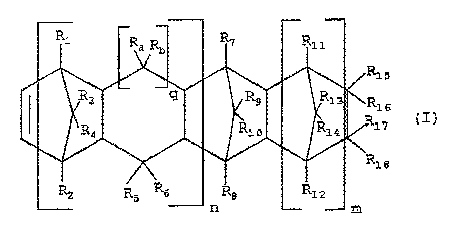
worin
- n 0 oder eine positive ganze Zahl,
- m 0 oder eine positive ganze Zahl und
- g 0 oder 1 bedeuten,
- R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R^{a} und R^{b}, die gleich oder unterschiedlich sein können, ein Wasserstoffatom, ein Halogenatom oder eine aliphatische, alicyclische oder aromatische Kohlenwasserstoffgruppe bedeuten,
- R¹⁵, R¹⁶, R¹⁷ und R¹⁸ miteinander unter Bildung einer monocyclischen oder polycyclischen Gruppe, die Doppelbindungen aufweisen kann, verknüpft sein können, und
- R¹⁵ und R¹⁶ oder R¹⁷ und R¹⁸ zusammen eine Alkylidengruppe bilden können.

7. Reifen nach Anspruch 6, bei dem im statistischen Cycloolefincopolymer (b-1) das aliphatische α-Olefin ein Olefin der Formen CH₂=CH-R ist, worin R ein Wasserstoffatom und eine unverzweigte oder verzweigte Alkylgruppe mit 1 bis 12 Kohlenstoffatomen darstellt.

8. Reifen nach Anspruch 7, bei dem das aliphatische α-Olefin ausgewählt wird unter Ethylen, Propylen, 1-Buten, Isobutyl, 1-Penten, 1-Hexen, 3-Methyl-1-buten, 3-Methyl-1-penten, 4-Methyl-1-penten, 4-Methyl-1-hexen, 4,4-Dimethyl-1-hexen, 4,4-Dimethyl-1-penten, 4-Ethyl-1-hexen, 3-Ethyl-1-hexen, 1-Octen, 1-Decen, 1-Dodecen, 1-Tetradecen, 1-Hexadecen, 1-Octadecen, 1-Eicosen oder einem Gemisch davon

9. Reifen nach Anspruch 8, bei dem das aliphatische α-Olefin Ethylen oder Propylen ist.

10. Reifen nach einem der vorhergehenden Ansprüche, bei dem ein Cycloolefinpolymer (b) ausgewählt wird unter Copolymeren eines cyclischen Olefins mit einer Norbornenstruktur und eines aliphatischen α-Olefins.

11. Reifen nach Anspruch 10, bei dem ein Cycloolefinpolymer (b) ausgewählt wird unter Norbomen-Ethylen-Copolymer, Norbomen-Propylen-Copolymer, Tetracyclododecen-Ethylen-Copolymer und Tetracyclododecen-Propylen-Copolymer

12. Reifen nach Anspruch 11, bei dem ein Cycloolefinpolymer (b) ein Norbomen-Ethylen-Copolymer ist.

13. Reifen nach einem der vorhergehenden Ansprüche, bei dem in einem statistischen Cycloolefincopolymer (b-1) das Polyen ein Dien ist

14. Reifen nach einem der vorhergehenden Ansprüche, bei dem das Cycloolefinpolymer (b) im Elastomergemisch in einer Menge von 0,1 bis 100 phr vorliegt.

15. Reifen nach Anspruch 14, bei dem das Cycloolefinpolymer (b) im Elastomergemisch in einer Menge von 3 bis 60 phr vorliegt

16. Reifen nach Anspruch 15, bei dem das Cycloolefinpolymer (b) im Elastomergemisch in einer Menge von 5 bis 40 phr vorliegt

17. Reifen nach einem der vorhergehenden Ansprüche, bei dem das Dienelastomerpolymer (a) eine Glasumwandlungstemperatur (T_{g}) von unter 20° C aufweist

18. Reifen nach Anspruch 17, bei dem das Dienelastomerpolymer (a) ausgewählt wird aus cis-1,4-Polyisopren, 3,4-Polyisopren, Polybutadien, gegebenenfalls halogenierten Isopren-Isobuten-, 1,3-Butadien-Acrylnitril-, Styrol-1,3-Butadien-, Styrol-Isopren-1,3-Butadien-, Styrol-1,3-Butadien-Acrylnitril-Copolymeren oder Gemischen davon.

19. Reifen nach einem der vorhergehenden Ansprüche, bei dem das Elastomergemisch wenigstens ein Elastomerpolymer aus einem oder mehreren Monoolefinen mit einem Olefincomonomer oder Derivaten davon (c) umfaßt

20. Reifen nach Anspruch 19, bei dem das Elastomerpolymer (c) ausgewählt wird aus Ethylen-Propylen-Copolymeren (EPR) oder Ethylen-Propylen-Dien-Copolymeren (EPDM), Polyisobuten, Butylkautschuken, Halobutylkautschuken oder Gemischen davon.

21. Reifen nach einem der vorhergehenden Ansprüche, bei dem das Elastomergemisch außerdem noch ein Vulkanisationssystem (d) auf Schwefelbasis aufweist,

22. Reifen nach Anspruch 21, bei dem das Vulkanisationssystem auf Schwefelbasis Schwefel oder Schwefel enthaltende Moleküle, Beschleuniger und Aktivatoren umfaßt.

23. Reifen nach einem der vorhergehenden Ansprüche, bei dem wenigstens ein Verstärkungsfüller in einer Menge von 0,1 phr bis 120 phr im Elastomergemisch vorliegt.

24. Reifen nach Anspruch 23, bei dem der Verstärkungsfüller Ruß ist.

25. Reifen nach Anspruch 23, bei dem der Verstärkungsfüller Kieselerde ist.

26. Reifenlaufflächenband, das ein vernetzbares Elastomergemisch enthält, das
(a) wenigstens ein Dienelastomerpolymer und
(b) wenigstens ein Cycloolefinpolymer umfaßt, das eine Glasumwandlungstemperatur (T_{g}) von wenigstens 50° C aufweist.

27. Reifenlaufflächenband nach Anspruch 26, bei dem das Cycloolefinpolymer eine Glasumwandlungstemperatur (T_{g}) im Bereich von 80° C bis 200° C aufweist

28. Reifenlaufflächenband nach Anspruch 27, bei dem das Cycloolefinpolymer eine Glasumwandlungstemperatur (T_{g}) im Bereich von 100° C bis 1600° C aufweist

29. Reifenlaufflächenband nach einem der Ansprüche 26 bis 28, bei dem das Ethylencopolymer mit wenigstens einem aliphatischen α-Olefin (b) nach einem der Ansprüche 6 bis 16 definiert ist.

30. Reifenlaufflächenband nach einem der Ansprüche 26 bis 29, bei dem das Dienelastomerpolymer (a) nach Anspruch 17 oder 18 definiert ist.

31. Reifenlaufflächenband nach einem der Ansprüche 26 bis 30, bei dem das Elastomergemisch wenigstens ein Elastomerpolymer (c), definiert nach Anspruch 19 oder 20, umfaßt.

32. Reifenlaufllächenband nach einem der Ansprüche 26 bis 31, bei dem das vernetzbare Elastomergemisch außerdem noch ein Vulkanisationssystem (d) auf Schwefelbasis, definiert nach Anspruch 21 oder 22, aufweist.

33. Reifenlaufflächenband nach einem der Ansprüche 26 bis 32, bei dem wenigstens ein Verstärkungsfüller in einer Menge von 0,1 phr bis 120 phr im Elastomergemisch vorliegt.

34. Reifenlaufflächenband nach Anspruch 33, bei dem der Verstärküngsfüller Ruß ist.

35. Reifenlaufflächenband nach Anspruch 33, bei dem der Verstärkungsfüller Kieselerde ist.

36. Elastomergemisch enthaltende:
(a) wenigstens ein Dienelastomerpolymer und
(b) wenigstens ein Cycloolefinpolymer umfaßt, das eine Glasumwandlungstemperatur (Tg) von wenigstens 50° C aufweist, und
(d) ein Vulkanisationssystem auf Schwefelbasis

37. Elastomergemisch nach Anspruch 36, bei dem das Cycloolefinpolymer eine Glasumwandlungstemperatur (T_{g}) im Bereich von 80° C bis 200° C aufweist.

38. Elastomergemisch nach Anspruch 37, bei dem das Cycloolefinpolymer eine Glasumwandlungstemperatur (T_{g}) im Bereich von 100° C bis 160° C aufweist.

39. Elastomergemisch nach einem der Ansprüche 36 bis 38, bei dem das Ethylencopolymer mit wenigstens einem aliphatischen α-Olefin (b) nach einem der Ansprüche 6 bis 16 definiert ist.

40. Elastomergemisch nach einem der Ansprüche 36 bis 39, bei dem das Dienelastomerpolymer (a) nach Anspruch 17 oder 18 definiert ist.

41. Elastomergemisch nach einem der Ansprüche 36 bis 40, bei dem das Elastomergemisch wenigstens ein Elastomerpolymer (c), definiert nach Anspruch 19 oder 20, umfaßt.

42. Elastomergemisch nach einem der Ansprüche 36 bis 41, bei dem das Vulkanisationssystem auf Schwefelbasis Schwefel oder Schwefel enthaltende Moleküle, Beschleuniger und Aktivatoren umfaßt.

43. Elastomergemisch nach einem der Ansprüche 36 bis 42, bei dem wenigstens ein Verstärkungsfüller in einer Menge von 0,1 phr bis 120 phr im Elastomergemisch vorliegt.

44. Elastomergemisch nach Anspruch 43, bei dem der Verstärkungsfüller Ruß ist.

45. Elastomergemisch nach Anspruch 43, bei dem der Verstärkungsfüller Kieselerde ist.

46. Vernetztes Elastomerprodukt, erhalten durch Vernetzung eines nach einem der Ansprüche 36 bis 45 definierten Elastomergemisches.

## Revendications

1. Pneumatique pour roues de véhicules, comprenant au moins un composant fait d'un matériau élastomère réticulé, dans lequel ledit composant comprend une composition élastomère comprenant :
(a) au moins un polymère élastomère diénique ;
(b) au moins un polymère cyclooléfinique, ledit polymère cyclooléfinique ayant une température de transition vitreuse (Tg) d'au moins 50°C.

2. Pneumatique selon la revendication 1, comprenant :
- une structure de carcasse avec au moins un pli de carcasse façonné dans une configuration pratiquement toroïdale dont les bords latéraux opposés sont associés aux tringles respectives à droite et à gauche, chaque tringle étant enfermée dans un talon respectif ;
- une structure de nappe comprenant au moins une bande de nappe appliquée dans une position circonférentielle externe par rapport à ladite structure de carcasse ;
- une bande de roulement superposée en circonférence sur ladite structure de nappe ;
- une paire de flancs appliquée latéralement sur les côtés opposés par rapport à ladite structure de carcasse ;
dans lequel ledit composant qui comprend ladite composition élastomère est la bande de roulement.

3. Pneumatique selon la revendication 1 ou 2, dans lequel ledit polymère cyclooléfinique possède une température de transition vitreuse (Tg) dans la plage de 60 °C à 250°C.

4. Pneumatique selon la revendication 3, dans lequel ledit polymère cyclooléfinique possède une température de transition vitreuse (Tg) dans la plage de 80 °C à 200 °C.

5. Pneumatique selon la revendication 4, dans lequel ledit polymère cyclooléfinique possède une température de transition vitreuse (Tg) dans la plage de 100 °C à 160°C.

6. Pneumatique selon l'une quelconque des revendications précédentes, dans lequel le polymère cyclooléfinique (b) est choisi parmi :
(b-1) un copolymère statistique cyclooléfinique obtenu en copolymérisant (i) au moins une α-oléfine aliphatique et (ii) au moins une cyclooléfine représentée par la formule (1) suivante et, en option, (iii) un polyène;
(b-2) un polymère obtenu par ouverture de cycle d'au moins une cyclooléfine représentée par la formule (I) suivante ; et
(b-3) un produit d'hydrogénation d'un polymère obtenu par ouverture de cycle d'au moins une cyclooléfine représentée par la formule (I) suivante ; 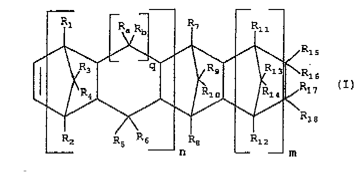
formule dans laquelle :
- n vaut 0 ou un nombre entier positif ;
- m vaut 0 ou un nombre entier positif ;
- q vaut 0 ou 1 ;
- R₁, R₂, R₃, R₄, R₅, R₆, R₇, R₈, R₉, R₁₀, R₁₁, R₁₂, R₁₃, R₁₄, R₁₅, R₁₆, R₁₇, R₁₈, Rₐ et R_{b}, qui peuvent être identiques ou différents les uns des autres, représentent un atome d'hydrogène, un atome d'halogène, ou un groupe hydrocarboné aliphatique, alicyclique ou aromatique ;
- R₁₅, R₁₆, R₁₇, R₁₈, peuvent être liés les uns aux autres pour former un groupe monocyclique ou polycyclique qui peut avoir des doubles liaisons ; et
- R₁₅ et R₁₆, ou R₁₇ et R₁₈, peuvent former ensemble un groupe alkylidène

7. Pneumatique selon la revendication 6, dans lequel dans le copolymère statistique cyclooléfinique (b-1) , l'α-oléfine aliphatique est une oléfine de formule CH₂=CH-R, dans laquelle R représente un atome d'hydrogène, un groupe alkyle linéaire ou ramifié contenant de 1 à 12 atomes de carbone.

8. Pneumatique selon la revendication 7, dans lequel l'α-oléfine aliphatique est choisie parmi : l'éthylène, le propylène, le 1-butène, l'isobutylène, le 1-pentène, le 1-hexène, le 3-méthyl-1-butène, le 3-méthyl-1-penténe, le 4-méthyl-1-pentène, le 4-méthyl-1-hexène, le 4,4-diméthyl-1-hexène, le 4,4-diméthyl-1-pentène, le 4-éthyl-1-hexène, le 3-éthyl-1-hexène, le 1-octène, le 1-décène, le 1-dodécène, le 1-tétradécène, le 1-hexadécène, le 1-octadécène, le 1-eicoséne ou un de leur mélange

9. Pneumatique selon la revendication 8, dans lequel l'α-oléfine aliphatique est l'éthylène ou le proppylène.

10. Pneumatique selon l'une quelconque des revendications précédentes, dans lequel un polymère cyclooléfinique (b) est choisi parmi des copolymères d'une oléfine cyclique ayant une structure norbornène et d'une α-oléfine aliphatique.

11. Pneumatique selon la revendication 10, dans lequel un polymère cyclooléfinique (b) est choisi parmi un copolymère norbornène-éthylène, un copolymère norbornène-propylène, un copolymère tétracyclododécène-éthylène, un copolymère tetracyclododecene-propylene.

12. Pneumatique selon la revendication 11, dans lequel un polymère cyclooléfinique (b) est un copolymère norbornène-ethylène.

13. Pneumatique selon l'une quelconque des revendications précédentes, dans lequel dans un copolymère statistique cyclooléfinique (b-1), le polyène est un diène,

14. Pneumatique selon l'une quelconque des revendications précédentes, dans lequel le polymère cyclooléfinique (b) est présent dans la composition élastomère en une quantité de 0,1 phr (partie pour cent d'élastomère) à 100 phr.

15. Pneumatique selon la revendication 14, dans lequel le polymère cyclooléfinique (b) est présent dans la composition élastomère en une quantité de 3 phr à 60 phr.

16. Pneumatique selon la revendication 15, dans lequel le polymère cyclooléfinique (b) est présent dans la composition élastomère en une quantité de 5 phr à 40 phr.

17. Pneumatique selon l'une quelconque des revendications précédentes, dans lequel le polymère élastomère diénique (a) possède une température de transition vitreuse (Tg) inférieure à 20 °C

18. Pneumatique selon la revendication 17, dans lequel le polymère élastomère diénique (a) est choisi parmi : le cis-1,4-polyisoprène, le 3,4-polyisoprène, le polybutadiène, les copolymères isoprène/isobutène éventuellement halogénés, les copolymères 1,3-butadiène/acrylonitrile, les copolymères styrène/1,3-butadiène, les copolymères styréne/isoprène/1,3-butadiène, les copolymères styrène/1,3-butadiène/acrylonitrile ou leurs mélanges.

19. Pneumatique selon l'une quelconque des revendications précédentes, dans lequel la composition élastomère comprend au moins un polymère élastomère d'une ou plusieurs monooléfines avec un comonomère oléfinique ou leurs dérivés (c).

20. Pneumatique selon la revendication 19, dans lequel le polymère élastomère (c) est choisi parmi les copolyméres éthylène/propylène (EPR) ou les copolymères éthylène/propylène/diène (EPDM) ; le polyisobutène ; les caoutchoucs butyl ; les caoutchoucs halogénobutyl ; ou leurs mélanges.

21. Pneumatique selon l'une quelconque des revendications précédentes, dans lequel la composition élastomère comprend en outre un système de vulcanisation à base de soufre (d).

22. Pneumatique selon la revendication 21, dans lequel le système de vulcanisation à base de soufre comprend le soufre, ou des molécules contenant du soufre, des accélérateurs et des activateurs.

23. Pneumatique selon l'une quelconque des revendications précédentes, dans lequel au moins une charge renforçante est présente, en une quantité comprise entre 0,1 phr et 120 phr, dans la composition élastomère.

24. Pneumatique selon la revendication 23, dans lequel la charge renforçante est le noir de carbone.

25. Pneumatique selon la revendication 23, dans lequel la charge renforçante est la silice.

26. Bande de roulement de pneumatique comprenant une composition élastomère réticulable comprenant :
(a) au moins un polymère élastomère diénique ;
(b) au moins un polymère cyclooléfinique, ledit polymère cyclooléfinique ayant une température de transition vitreuse (Tg) d'au moins 50 °C

27. Bande de roulement de pneumatique selon la revendication 26, dans laquelle ledit polymère cyclooléfinique possède une température de transition vitreuse (Tg) dans la plage de 80 °C à 200 °C.

28. Bande de roulement de pneumatique selon la revendication 27, dans laquelle ledit polymère cyclooléfinique possède une température de transition vitreuse (Tg) dans la plage de 100 °C à 160 °C

29. Bande de roulement de pneumatique selon l'une quelconque des revendications 26 à 28, dans laquelle le copolymère d'éthylène avec au moins une α-oléfine aliphatique (b) est défini conformément à l'une quelconque des revendications 6 à 16.

30. Bande de roulement de pneumatique selon l'une quelconque des revendications 26 à 29, dans laquelle le polymère élastomère diénique (a) est défini conformément à la revendication 17 ou 18

31. Bande de roulement de pneumatique selon l'une quelconque des revendications 26 à 30, dans laquelle la composition élastomère comprend au moins un polymère élastomère (c) défini conformément à la revendication 19 ou 20.

32. Bande de roulement de pneumatique selon l'une quelconque des revendications 26 à 31, dans laquelle la composition élastomère réticulable comprend en outre un système de vulcanisation à base de soufre (d) conforme à la revendication 21 ou 22.

33. Bande de roulement de pneumatique selon l'une quelconque des revendications 26 à 32, dans laquelle au moins une charge renforçante est présente, en une quantité comprise entre 0,1 phr et 120 phr, dans la composition élastomère

34. Bande de roulement de pneumatique selon la revendication 33, dans lequel la charge renforçante est le noir de carbone.

35. Pneumatique selon la revendication 33, dans lequel la charge renforçante est la silice.

36. Composition élastomère comprenant :
(a) au moins un polymère élastomère diénique ;
(b) au moins un polymère cyclooléfinique, ledit polymère cyclooléfinique ayant une température de transition vitreuse (Tg) d'au moins 50 °C ; et (d) un système de vulcanisation à base de soufre

37. Composition élastomère selon la revendication 36, dans laquelle ledit polymère cyclooléfinique possède une température de transition vitreuse (Tg) dans la plage de 80 °C à 200 °C.

38. Composition élastomère selon la revendication 37, dans laquelle ledit polymère cyclooléfinique possède une température de transition vitreuse (Tg) dans la plage de 100 °C à 160 °C.

39. Composition élastomère selon l'une quelconque des revendications 36 à 38, dans laquelle le copolymère d'éthylène avec au moins une α-oléfine aliphatique (b) est défini conformément à l'une quelconque des revendications 6 à 16.

40. Composition élastomère selon l'une quelconque des revendications 36 à 39, dans laquelle le polymère élastomère diénique (a) est défini conformément à la revendication 17 ou 18.

41. Composition élastomère selon l'une quelconque des revendications 36 à 40, dans laquelle la composition élastomère comprend au moins un polymère élastomère (c) défini conformément à la revendication 19 ou 20

42. Composition élastomère selon l'une quelconque des revendications 36 à 41, dans laquelle le système de vulcanisation à base de soufre comprend le soufre, ou des molécules contenant du soufre, des accélérateurs et des activateurs.

43. Composition élastomère selon l'une quelconque des revendications 36 à 42, dans laquelle au moins une charge renforçante est présente, en une quantité comprise entre 0,1 phr et 120 phr.

44. Composition élastomère selon la revendication 43, dans laquelle la charge renforçante est le noir de carbone.

45. Composition élastomère selon la revendication 43, dans laquelle la charge renforçante est la silice.

46. Produit manufacturé élastomère réticulé obtenu par réticulation d'une composition élastomère définie conformément à l'une quelconque des revendications 36 à 45.
